# EUROPEAN PATENT SPECIFICATION

(11) **EP 1 697 444 B1**
(45) Date of publication and mention of the grant of the patent: **12.06.2013**
(21) Application number: 04727449.3
(22) Date of filing: 14.04.2004
(51) Int. Cl.: C08J 5/18, C09J 7/02, C08J 7/04

(54) **SILICONE RELEASE POLYMER FILM**
SILIKONRELEASE-POLYMERFOLIE
FILM DE POLYMÈRE A DÉGAGEMENT DE SILICONE

(30) Priority: 02.12.2003 KR 2003086685
(43) Date of publication of application: 06.09.2006
(73) Proprietor: Toray Advanced Materials Korea Inc., Gumi-si Gyeongsangbuk-do 730-350 (KR)
(72) Inventor: KIM, Sang-pil, Kyungbuk 730-130 (KR); JUN, Hae-sang, Kyungbuk 730-130 (KR); LEE, Moonbok, Kyungbuk 730-020 (KR); LEE, Jeong-woo, Gumi-city, Kyungbuk 730-767 (KR)
(74) Representative: Novagraaf Technologies
(86) International application number: PCT/KR2004/000861
(87) International publication number: WO 2005/054346

(56) References cited:
- EP-A1- 1 293 357
- EP-A2- 0 769 540
- JP-A- 09 109 346
- JP-A- 09 262 936
- JP-A- 2000 233 481
- JP-A- 2001 341 263
- JP-A- 2002 210 883
- JP-A- 2002 273 831
- JP-A- 2003 001 777
- JP-A- 2003 048 290
- JP-A- 2003 231 214
- JP-A- 2004 017 467
- KR-B1- 100 231 762
- KR-B1- 100 381 762
- KR-B1- 940 003 889
- US-A- 4 765 999
- US-A- 5 728 339
- US-A- 6 057 041
- US-B1- 6 410 134

## Description

### Technical Field

The present invention relates to a silicone release polyester film, and more particularly to a silicone release polyester film whose properties of stabilization for pass-the-time and rub-off after thermal ripening are very good.

### Background Art

Generally, silicone chemistry started from the field requiring a hardening system such as paints, rubber, sealants, adhesives and the like and has been used for separating an adhesive layer and a release layer by taking advantage of low surface energy. The release layer can be obtained by applying a release agent to a plastic film or sheet, or base material such as paper, non-woven fabrics, etc. Examples of the method are described in the patent documents of EP 0527080, JP 62-160957 and US 5672428 about the technology for applying a release layer while forming plastic films or sheets. Release films formed by means of coextrusion are described in WO 94/016885 and the films were designed as tapes for diapers, using different materials in coextrusion. In order to improve inter-surface adhesiveness capability between polyester and silicone, the surface of the plastic film to be used as a substrate is chemically treated by means of corona treatment, plasma treatment, etc., to raise surface tension and thereby to improve wettability of release liquid or, for the polyester film, polymers of high polarity such as greatly compatible denatured polyester, partially hydrolyzed ethylenevinyl acetate copolymers, special acrylic copolymers, polyvinylbutyral, etc. have been treated and used.

In order to stabilize a contact enhancer and a hardening system in conventional silicone, methods of stabilization were known in US 4087585, US 4677160 and JP 62-160957 which were applied in the process for producing polyester as described in EP 0527080, US 5672428 and US 5728339. The aforementioned methods were announced to be effective in improving contact and adhesive capability of silicone with a film, and used in mixing contact enhancers such as water distribution ester, water distribution acryl and alkoxy silane for usefully improving adhesiveness between polyester and silicone. As a result of test and research by the inventors, however, the inventors found that problems occurred with respect to the Bath-Life. As announced by K.W.Allen, et.al, sudden liquid swelling and gellation by dependency on shear, acid and base (pH) occurred, resulting in filtering problems during the coating process and bad external physical properties of a coated film surface. Since coating during a process for manufacturing a film is subject to a transformation process of stretch, very close attention is further required for adhesiveness between a release agent and a substrate and flatness. Bad flatness of the release layer in in-line release agent coating results from flexibility of the silicone backbone. While expansion or contraction during the stretch or annealing process occurs after release agent coating, rub-off may occur possibly due to a difference in cross-linking speed, partial cross-linking and lack of flexibility in a cross-linked release film after manufacturing the film resulting from non-uniform expansion and contraction of the release layer or non-uniform heat transfer, and resulting from micro reaction between polyester and a cross-linker.

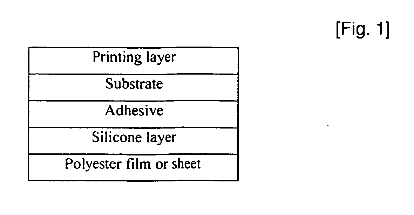

In the process of producing general adhesion labels having a configuration shown in Fig.1, adhesion capability is weakened on a adhesive layer combined with a silicone layer in silicone transfer and bad printing is caused on the surface opposite to the adhesive layer.

### Disclosure

The present invention was devised to solve aforementioned problems. It is an object of the present invention to provide a profitable special silicone release polyester film by applying and drying special silicone liquid on at least one surface of a sheet during a process for producing a coextruded polyester film in order to reduce off-line cost.

It is another object of the invention to provide a special silicone release polyester film which has stabilization for pass-the time of the film and uniform separation and release capability by controlling the content and the size of inorganic fillers in respective layers of a coextruded polyester film.

It is still another object of the invention to provide a special silicone release polyester film that is suitable for electronic use and other uses requiring uniform release capability and that can solve the problem of weakened adhesiveness on a adhesive layer combined with a silicone layer resulting from silicone transfer in the manufacturing process of the film and the problem of bad printing on the surface opposite to the adhesive layer.

### Description Of Drawings

These and other features, aspects and advantages of the invention will become apparent to those skilled in the art through the following description with reference to the appended drawing in which:

Fig. 1 shows a configuration of a general adhesion label.

### Best Mode

Hereinafter, preferred embodiments of the present invention will be described in more detail.

A special silicone release polyester film according to the invention in order to achieve the above objects is characterized in that one surface of the coextruded polyester film or sheet is coated with silicone release liquid, wherein the outmost layer on the surface of the coextruded polyester film or sheet to be silicone-coated contains PET-I which is a reaction product of ethyleneglyool (EG) and isophthalic acid (IPA) or a reaction product of ethyleneglycol (EG) and dimethylisophtalate (DMI), PET-G which is a reaction product of cyclohexanedimethanol (CHDM) and terephthalicacid (TPA) or a reaction product of cyclohexanedimethanol (CHDM) and dimethylterephthalate (DMT), or a copolymer thereof, and
wherein the silicone release liquid comprises hexenyl polysiloxane of 4 to 30 weight%, hydrogen polysiloxane of 0.02 to 1 weight%, organo resin having the vinyl radical of 0.005 to 2 weight%, chelate platinum catalyst of 0.0005 to 0.005 weight%, and the residue of water and polyvinyl alcohol.

A special silicone release polyester film according to the invention is characterized in that a surface roughness (BRa) on the surface coated with the silicone release liquid is low and a surface roughness (FRa) of the polyester film not coated with the silicone release liquid is high. The invention is characterized in that, preferably, the surface roughness (BRa) of the surface coated with the silicone release liquid is 0.0055 µm to 0.6 µm and the surface roughness (FRa) of the polyester film not coated with the silicone release liquid is 0.0055 µm to 6.6 µm.

The silicone release polyester film according to the invention is also characterized in that the layer coated with the silicone release liquid after drying has equal to or below 10% of silicone residue extracted in an organic solvent.

The silicone release polyester film according to the invention is also characterized in that the dried silicone release liquid coated layer has a thickness of 0.1 to 2.4 µm.

The silicone release polyester film according to the invention is characterized in that the silicone release liquid comprises hexenyl polysiloxane of 4 to 30 weight%, hydrogen polysiloxane of 0.02 to 1 weight%, organo resin having the vinyl radical of 0.005 to 2 weight%, chelate platinum catalyst of 0.0005 to 0.005 weight%, water and polyvinyl alcohoL

Silicone develops the property of release by low surface energy of the dimethyl radical, wide angles between silicone atoms and oxygen atoms, and rotatory force, etc. in its chemical structure. With such a basic property of the silicone structure, a functional radical containing the alkenyl radical at a specific position is introduced to react it with a cross-linker and thereby to form a chain structure. In this case, for the introduced alkenyl radical, the vinyl radical is generally used, but is known to have problems in variation of separation capability when used in the case requiring a high separation and release speed. To overcome the problem, the inventors tried to find a silicone structure less affected by a separation speed and found a method to obtain uniform separation capability when the hexenyl polysiloxane selected by the inventors was used. The inventor also found that it was possible to achieve rapid hardening, less variation in pass-the-time and stable release capability when the hexenyl polysiloxane was used.

In addition, US 4,765, 999 discloses that the copolymerization of polyester with PET-G is very effective in heat sealing used in polyester films for packaging. With the result, the inventor applied a silicone-adherable copolymer onto the surface to be silicone-coated, so that the inventor found that anchorage between silicone and the polyester surface was improved.

It was also possible to achieve stabilization for pass-the-time of wound film rolls by making roughness on one surface and the other surface different and coating the polyester surface with release liquid. By adding organo resin having the vinyl radical to the silicone emulsion release liquid and coating the polyester surface with the release liquid, stabilization on the coated silicone layer after drying and good hardening was achieved, so that it was possible to produce a silicone release polyester film in which the content of silicone residue is below 10%. Because of wide molecular angles between silicone and oxygen and favorable rotation in the silicone structure, good gas permeability and moisture permeability is achieved, but acid resistance and alkali resistance is bad in its structure. To solve such a problem, it was possible to control flexibility of the silicone layer by using organo resin having the vinyl radical. The organo resin having the vinyl radical used by the inventors effected improvement of the properties of smoothness, solvent resistance and rub-off after thermal ripening of the release coating. It was also possible to achieve the objects of the invention by applying a polyester film whose surface and back roughness is different in order to overcome the problems, static electricity on a polyester substrate and bad runability.

It was also possible to achieve uniform separation capability by using hexenyl polysiloxane with a silicone structure less affected by a separation speed. The inventors also found that it was possible to achieve rapid hardening, less variation in pass-the-time and stable release capability when hexenyl polysiloxane was used.

The silicone release polyester film according to the invention can be used in various fields of adhesion labels, release films for polarizing plates, release carriers used when producing MLCC (Multi-Layer-Ceramic Capacitor), release films for solar control, LCD protective release films, overlamination, pathy for medical use, viscous tapes, etc. in order to raise values of products and differentiate products. The MLCC must particularly have an excellent separation capability for ceramic molding in the process for drying and solidifying liquid ceramic with good process running capability and specific viscosity and separating ceramic sheets. The two surfaces of the polyester film were designed to have each different roughness in order to improve runability and processing capability on the layer with a relatively high surface roughness and to make the ceramic coated layer be more uniform and thin by coating the layer of the low surface roughness with silicone. The inventors thereby found that it was possible to develop a property of good dielectrics and also to separate the ceramic layer from the release film by means of a constant force, which gives good quality for various carriers on coextruded release polyester films.

The silicone release polyester film according to the invention can be applied to coextruded non-stretched sheets, corona-treated coextruded uniaxially stretched films or coextruded successive biaxially stretched films, corona-treated and non-corona treated (right before simultaneous biaxial stretching) coextruded polyester sheets, polyethylene or polypropylene substrates, etc.

The inventors found that the effect of the invention could be achieved when the surface roughness of the hardened and stretched film after silicone coating on a coextruded polyester sheet was that described below. That is, it is the case when the surface roughness (BRa) on the silicone release liquid coated surface is 0.005*µ*m to 0.6*µ*m. The surface roughness on the silicone coated surface equal to or below 0.005*µ*m causes instability during the casting process for quenching polyester in a hot melt phase and the stretch process in a mechanical direction when producing the films. The surface roughness equal to or higher than 0.6*µ*m causes non-uniform physical properties during the silicone coating process, especially non-uniform coating. Therefore, the surface roughness between 0.005*µ*m and 0.6*µ*m is preferred. The surface roughness (FRa) of the polyester film not coated with silicone release liquid is preferred to be 0.0055*µ*m to 6.6*µ*m. When the surface roughness on the surface not coated with silicone is equal to or below 1.1 times(0.0055*µ*m) relative to the surface roughness on the silicone coated surface, the variation in pass-the-time of the film roll wound after producing films was not good. When it is equal to or higher than 11 times (6.6*µ*m), problems in release property are caused by pressure and friction of a silicone layer forming a relatively weak film layer and rough surface roughness on the surface not coated with silicone,, while the film is wound in rolls. Therefore, it is preferred that the surface roughness ranges between 0.0055*µ*m and 6.6*µ*m.

Inorganic fillers that can be used for coextruded polyester may be particles of silica, calcium carbonate, alumina, talc, titanium acid, etc. and can be dispersed in polymerization of polyester. In this case, the surface of the particles may be treated or not be treated.

The silicone emulsion release liquid of the silicone release polyester film according to the invention comprises hexenyl polysiloxane of 4 to 30 weight%, hydrogen polysiloxane of 0.02 to 1 weight%, organo resin having the vinyl radical of 0.005 to 2 weight%, chelate platinum catalyst of 0.0005 to 0.005 weight%, and the residue of water and polyvinyl alcohol. The average size of the particles of the water- dispersed emulsion release agent of hexenyl polysiloxane is 0.01 to 2µm and the viscosity of the release liquid with the composition is 1.1 to 5.6 centipoises, and preferably 1.2 to 3.5 centipoises. Higher viscosity requires higher pressure for supplying the liquid and is difficult to achieve stability at the wet state.

The silicone emulsion release liquid of the silicone release polyester film according to the invention can be applied directly onto polyester, polypropylene, polyethylene, polyvinyl chloride, nylon, and plastic-lamineted films; kraft paper; non-woven fabrics, cloths, etc., and has the content of total solid components of 4 to 30 weight%, preferably 6 to 20 weight%. The content below 4 weight% results in a problem in the physical property of release separation due to imperfect film formation and hardening resulting from low viscosity of the release liquid. The content equal to or higher than 30 weight% results in a problem of non-uniform coating due to increased viscosity.

The molecular structure of the hexenyl polysiloxane and hydrogen polysiloxane in the silicone emulsion release liquid of the silicone release polyester film according to the invention is shown below.

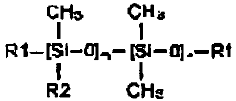

CH-CH₂ *for R1 and* CH₂-CH₂-CH2 CH-CH2 *for R2.*

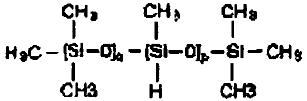

The organo resin having the vinyl radical controls flexibility of a silicone polymer layer and it was possible to thereby achieve stabilization in physical properties of the silicone layer. The organo resin having the vinyl radical is a spherical structure with the silicone and oxygen atoms which have a 3-dimensional linking chain and contains the vinyl radical at the end of the structure. When the amount of the organo resin having the vinyl radical is below 0.005 weight%, flexibility of the polyester and silicone layer was good and thereby solvent resistance was bad, causing rub-off and lowered stabilization for pass-the-time. When the amount is more than 2 weight%, it was not desirable because of inhibition of reaction site of hexenyl polysiloxane and hydrogen polysiloxane and excessive inhibition of flexibility of the silicone layer, causing increased release force. The substrate may have a thickness equal to or less than 2mm and preferably 5 to 1500*µ*m and apply corona treatment to the release liquid and such a substrate as polyester and then apply the release agent in order to achieve strong chemical coupling between a coextruded substrate and a release layer.

The thickness of the release liquid before stretching the polyester film is preferably 7.6*µ*m to 25.4*µ*m when it is wet, and 0.1 to 2.4*µ*m after a drying process. Preferably, the surface number average roughness of the polyester film coated with silicone is 0.003 to 1*µ*m and more preferably 0.005 to 0.6*µ*m. When the thickness of the silicone layer after drying is equal to or more than 3*µ*m, the surface coated with silicone and the surface not coated with silicone had the problem of blocking while winding with a given pressure. The inventors found rub-off after aging (after 24 hours at 50°C and 95% RH). Preferable process conditions for stretching at the same time with coating, thermosetting and drying the release liquid are 2.5 to 12 times for stretching, 60°C to 250°C for drying and hardening temperature, and 8 to 40m/s for wind speed, 8 seconds to 20 minutes and more preferably 10 seconds to 5 minutes for the time staying in a dryer.

Among the items for testing thermal stability of a coextruded polyester release film produced using the silicone release liquid, a thermal contraction rate is preferably 0.5 % to 2.5 % in a longitudinal direction, -0.03 % to 1.5 % in a width direction, and more preferably, 0.5 % to 2 % in the longitudinal direction and -0.01% to 1.0 % in the width direction, after thermal treatment for 30 minutes in an oven at 150°C. It was found that the polyester release film was not suitable for release using a hot-melt adhesive when the thermal contraction rate in the width direction was equal to or more than 1.5% after it was kept for 30 minutes in the oven at 150°C. In the case, a non-uniform release force may occur due to the difference in thermal conductivity when a silicone layer and a polyester film layer of the release film instantaneously contracts or expands while the hot-melt adhesive in a width direction is combined with the release film in a vertical direction.

Now, the invention will be described in detail with embodiments of the invention. It will be apparent to those skilled in the art that the embodiments are intended to illustrate more particularly rather than limit the invention, and the scope of the invention is not limited by the embodiments according to the subject of the invention.

[Embodiment]

For the embodiments 1-1 to 1-4, silicone release polyester films were produced by coating a surface of corona treated polyester with silicone release liquid having a composition shown in the table 1, particularly a composition with a different content of organo resin having the vinyl radical.

For the embodiments 2-1 to 2-2, silicone release polyester films with different surface roughness were produced as silicone release polyester films using the silicone release liquid having the composition of the embodiment 1-1.

The films for the embodiments 3-1 to 3-3 are the silicone release polyester films having the composition in the embodiment 1-2 and also having the surface roughness in the embodiment 2-1. However, on the one outmost coextruded layer to be silicone-coated, the film for the embodiment 3-1 contains PET-I, the film for the embodiment 3-2 contains PET-G, and the film for the embodiment 3-3 contains a copolymer of PET-I and PET-G (cyclohexane dimethylene terephthalate-co-isophthalate).

Here, PET-I is a reaction product of ethyleneglyool (EG) and isophthalic acid (IPA) or a reaction product of ethyleneglyool (EG) and dimethylisophtalate (DMI). PET-G is a reaction product of cyclohexanedimethanol (CHDM) and terephthalicacid (TPA) or a reaction product of cyclohexanedimethanol (CHDM) and dimethylterephthalate (DMT).

[Comparative example]

For the comparative examples 1-1 to 1-3, silicone release polyester films were produced by coating a surface of corona treated polyester with silicone release liquid having a composition shown in the table 1, particularly a composition with a different content of organo resin having the vinyl radical.

For the comparative examples 2-1 to 2-3, silicone release polyester films with different surface roughness were produced as silicone release polyester films using the silicone release liquid having the composition of the embodiment 1-1.

For the embodiment 3-1, the film is a silicone release polyester film having the composition in the embodiment 1-2 and also having a surface roughness in the embodiment 2-1, but made by silicon-coating the HOMO-PET surface.

**[Table 1] Release properties depending on a composition of release liquid**

| Release properties depending on a composition of release liquid | | | | | | | | | | |
|---|---|---|---|---|---|---|---|---|---|---|
| Item | Composition of release liquid (weight%) | | | | | Release force (average) | Content of silicone residue (%) | Solvent resistance | Coating thickness after drying | Rub-off after thermal ripening |
| | A | B | C | D | E | | | | | |
| Embodiment 1-1 | 8 | 0.02 | 0.03 | 0.002 | 91.948 | 17 | 2.5 | Ⓞ | 0.24 | Ⓞ |
| Embodiment 1-2 | 8 | 0.02 | 0.05 | 0.002 | 91.928 | 16 | 4.0 | Ⓞ | 0.3 | ○ |
| Embodiment 1⁼ 3 | 8 | 0.02 | 0.02 | 0.002 | 91.958 | 17 | 3.7 | Ⓞ | 0.24 | Ⓞ |
| Embodiment 1-4 | 8 | 0.02 | 0.01 | 0.002 | 91.968 | 25 | 5.6 | ○ | 0.1 | ○ |
| Comparative example 1-1 | 8 | 0.02 | 0.003 | 0.002 | 91.975 | 24 | 8.9 | △ | 0.24 | △ |
| Comparative example 1-2 | 8 | 0.02 | 0.001 | 0.002 | 91.977 | 23 | 11.8 | ∇ | 0.3 | ∇ |
| Comparative example 1-3 | 8 | 0.02 | 0 | 0.002 | 91.978 | 30 | 22.5 | ∇ | 0.1 | ∇ |
| Remarks | A: hexenyl polysiloxane , B: hydrogen polysiloxane, | | | | | | | | | |
| | C: organo resin having vinyl radical, D: chelate platinum catalyst | | | | | | | | | |
| | E: the residue of water and polyvinyl alcohol | | | | | | | | | |
| | Ⓞ: very good p : good ; ; Δ: normal; ∇: bad | | | | | | | | | |

As shown in table 1, it was found that the embodiments 1-1 to 1-4 according to the invention showed very good properties of surface adhesive capability and release because the surface of corona-treated polyester was coated with the silicone release liquid containing organo resin having the vinyl radical, as compared to the comparative examples 1-1 to 1-3. That is, it was found that the silicone release layer according to the invention was easily taken off after being combined with a standard adhesive tape when measuring the capabilities of separation and release by improving surface adhesive capability by means of chemical coupling with the polyester film, and the silicone layer showed stable performance when strongly rubbed with fingers after being subject to solvent resistance and thermal ripening test The content of silicone residue was measured by dipping the film into methyl etherketone (MEK) that is an organic solvent to check a hardening degree. When the content of the aforementioned silicone residue was equal to or less than 10%, it was found that solvent resistance and rub-off property after thermal ripening was very good. In the comparative examples 1-1 to 1-3 where silicone release liquid comprising organo resin having the vinyl radical less than a given content was used, the separation capability and rub-off property after thermal ripening was not desirable.

In addition, a coextruded release film was produced using release liquid of the embodiment 1-1, and a friction coefficient, a Beloit roll hardness, stabilization for pass-the-time, etc. of the film produced as such were measured.

Table 2 shows the data of stabilization for pass-the-time tested with a polyester silicone release film produced with the composition of release liquid of the embodiment 1-1 specified in table 1 and according to the basic specification of 23µm in thickness, 1555mm in width and 7000m in length, and then left for 30 weeks under the condition of 25°C±10°C and 50%±10% according to respective properties.

**[Table 2] Result of testing stabilization for pass-the-time of roll product**

| Result of testing stabilization fo rpass-the-time of roll product | | | | | | | | | | |
|---|---|---|---|---|---|---|---|---|---|---|
| | Surface roughness | | | | | | Friction coefficient | | Beloit roll hardness | Stabilization for pass-the-time |
| Item | Surface not coated with silicone | | | Silicone coated surface | | | | | | |
| | FRa | FRz | FRmax | BRa | BRz | BRmax | µ s | µ k | | |
| Embodiment 2.1 | 0.214 | 1.198 | 2.983 | 0.030 | 0.124 | 0.673 | 0.15 | 0.06 | 63 | Ⓞ |
| Embodiment 2-2 | 0.201 | 1.406 | 2.461 | 0.021 | 0.122 | 0.474 | 0.13 | 0.08 | 53 | Ⓞ |
| Comparative example 2-1 | 0.037 | 0.478 | 0.853 | 0.032 | 0.335 | 0.754 | 0.27 | 0.18 | 77 | O |
| Comparative example 2-2 | 0.029 | 0.307 | 0.844 | 0.022 | 0.122 | 0.480 | 0.22 | 0.15 | 85 | ▲ |
| Comparative example 2-3 | 0.013 | 0.215 | 0.545 | 0.012 | 0.224 | 0.464 | 0.6 | 0.4 | 95 | ▲ |
| Remark | Ⓞ: very good;o : good;▲ ; normal | | | | | | | | | |

As shown in table 2, the coextruded release film configured to have a silicone coated surface having a low surface roughness and a surface not coated with silicone having a relatively high surface roughness as in the embodiment 2-1 and the embodiment 2-2 showed very good stabilization for pass-the-time and did not show internal and surface layer wrinkles at all.

In the comparative examples 2-1 to 2-3, both of the surface coated with and the surface not coated with silicone had low surface roughness and the films were not coextruded and showed lower stabilization for pass-the-time as compared to the embodiments. The release film having relatively high surface roughness showed both of surface layer wrinkles and internal wrinkles after a given time elapsed. In the comparative example 2-3, the release film having a relatively low surface roughness showed both of surface layer wrinkles and internal wrinkles within a relatively short time. With this result it was possible to examine a surface roughness, a roll hardness and stabilization for pass-the-time of a film when designing and producing the silicone release film.

**[Table 3] Anchorage with silicone of HOMO-PET and the layer containing copolymerized PET-I or PET-G on the outmost layer of the co-extrusion layer**

| | Aging rub-off | Rub-off in extremely bad condition |
|---|---|---|
| Embodiment 3-1 | Ⓞ | Ⓞ |
| Embodiment 3-2 | Ⓞ | O |
| Embodiment 3-3 | O | O |
| Comparative example 3-1 | O | △ |
| Remarks | Ⓞ: very good;o : good;▲ : normal | |

As seen in Table 3, if the outmost layer of one surface or the other surface of the coextrusion film in the embodiments 3-1 to 3-3 contains PET-I, PET-G or a copolymer thereof and is then silicon-coated, it was noted that rub-off in an extremely bad condition was significantly improved, that is, anchorage between the silicone release layer and the PET layer was very good.

Now, an experimental example will be described which was applied to embodiments and comparative examples according to the invention.

[Experimental example]

Analyzing release and separation capability

The capability was analyzed pursuant to Finat Test Method 1. A standard adhesive tape TESA747 was attached on and combined with a surface of a silicone release film with a load of 2kf and then left for a day. Thereafter, an average value was obtained by measuring the tape 5 times, with 180 degrees in a taking-off angle, 0.3m/min for a taking-off speed, 100m in measured size, 25.5mm in width, and in the unit of g/in for separation capability.

Measuring the content of silicone residue

The coating thickness ③ of the film was measured, using an x-ray fluorescence analyzer after applying the aforementioned release liquid and stretching and drying the resultant film. The silicone-hardened film was dipped into methyl etherketone that is an organic solvent and taken out after 24 hours elapsed. MEK on the film surface was volatilized in the air and the thickness ④ of silicone coating was measured using the x-ray fluorescence analyzer (XRF) to observe changes in the coating thickness. The content of silicone residue was obtained with the following equation.

Content of silicone residue= [(③ - ④)/ ③] * 100

Solvent resistance test

It was evaluated to be bad if the silicone layer was taken off when methyl etherketone was applied on a swab and the silicone layer in the coextruded polyester film layer was rubbed with the swab and good if the layer was not taken off.

Measuring the thickness of silicone coating

Thickness was measured, using the x-ray fluorescence analyzer (XRF) LAB-X 3000 made by Oxford Co.

Rub-off test after thermal ripening

The silicone coated film was left for 24 hours at 50°C and 95%RH, using a circulating oven. The film was rubbed with fingers several times to carry out the rub-off test and then to check adhesiveness between the hardened silicone film and the polyester film.

Rub-off test after applying extremely bad condition

After placing the silicone-coated film in a circulating oven for 24 days at 70°C and 95% of relative humidity, the film surface was strongly rubbed with a finger several times to carry out the rub-off test and to check anchorage between the cured silicon film and the polyester film.

Surface roughness test

Surface roughness of the silicone release polyester film was measured pursuant to JIS B0601. FRa is an average surface roughness of 10 points on the surface not coated with silicone and BRa is an average surface roughness of 10 points on the surface coated with silicone.

Measuring friction coefficient

The surface coated with silicone overlapped with the surface not coated with silicone to measure a static friction coefficient (µs) and a dynamic friction coefficient (µk), pursuant to ASTM D1894.

Measuring Beloit roll hardness

A film roll wound to be 23 µm in film thickness, 1555mm in width and 7000m in length was measured at intervals of 100mm for a shock wavelength of the film roll, using Bell-2000 model made by Mill Assist Service Co. and digital signaling was then applied thereto in order to check uniformity of the roll hardness.

Testing stabilization for pass-the-time

The film was made to be a wound roll of 7,000m and left for 30 weeks at 25°C±10°C and 50%±15% RH to test stabilization for pass-the-time. The stabilization for pass-the-time depends on created wrinkles on the surface layer and the internal layer of the film roll.

The invention illustrates herein several tests among various manufacturing methods and tests carried out by the inventors according to the method of manufacturing a silicone release polyester film. It should be noted that the technical spirit of the invention shall not be limited or restricted thereby, and can be modified and carried out variously by those skilled in the art.

As described in the above, the silicone release polyester film according to the invention is very good in stabilization for pass-the-time and also very good in the property of rub-off after thermal ripening by improving adhesiveness between the polyester layer and the silicone layer by organo resin having the vinyl radical in the silicone film layer. By improving easiness of release destruction behavior with the adhesive used for release by containing the organo resin having the vinyl radical in hexenyl polysiloxane, the silicone release polyester film can be used for electronics and the field requiring uniform release. The silicone release polyester film according to the invention can solve the problems of weakened adhesiveness on an adhesive layer combined with the silicone layer resulting from silicone transfer in a process and of bad printing on the surface opposite to the adhesive layer, by allowing the property of minimized silicone transfer in which the content of silicone residue is below 10% by means of excellent silicone hardening.

## Claims

1. A silicone release polyester film of a coextruded polyester film or sheet, **characterized in that** one surface of the coextruded polyester film or sheet is coated with silicone release liquid, wherein the outmost layer on the surface of the coextruded polyester film or sheet to be silicone-coated contains PET-I which is a reaction product of ethyleneglyool (EG) and isophthalic acid (IPA) or a reaction product of ethyleneglyool (EG) and dimethylisophtalate (DMI), PET-G which is a reaction product of cyclohexanedimethanol (CHDM) and terephthalicacid (TPA) or a reaction product of cyclohexanedimethanol (CHDM) and dimethylterephthalate (DMT), or a copolymer thereof, and wherein the silicone release liquid comprises hexenyl polysiloxane of 4 to 30 weight%, hydrogen polysiloxane of 0.02 to 1 weight%, organo resin having the vinyl radical of 0.005 to 2 weight%, chelate platinum catalyst of 0.0005 to 0.005 weight%, and the residue of water and polyvinyl alcohol.

2. The film as claimed in claim 1, **characterized in that** the surface roughness (BRa) of the surface coated with the silicone release liquid is 0.005 µm to 0.6 µm and the surface roughness (FRa) of the polyester film not coated with the silicone release liquid is 0.0055 µm to 6.6 µm.

3. The film as claimed in claim 2, **characterized in that** the layer coated with the silicone release liquid after drying has equal to or below 10% of silicone residue extracted in an organic solvent.

4. The film as claimed in claim 3, **characterized in that** the dried layer coated with silicone release liquid has a thickness of 0.1 to 2.4 µm.

5. A silicone release polyester film of a coextruded polyester film or sheet, **characterized in that** at least two surfaces of the coextruded polyester film or sheet are silicone coated, wherein the outmost layer on the surface of the coextruded polyester film or sheet to be silicone coated contains PET-I, which is a reaction product of ethyleneglyool (EG) and isophthalic acid (IPA) or a reaction product of ethyleneglyool (EG) and dimethylisophtalate (DMI), PBT-G which is a reaction product of cyclohexanedimethanol (CHDM) and teraphthalicacid (TPA) or a reaction product of cyclohexanedimethanol (CHDM) and dimethylterephthalate (DMT), or a copolymer thereof,
wherein the silicone release liquid comprises hexenyl polysiloxane of 4 to 30 weight%, hydrogen polysiloxane of 0.02 to 1 weight%, organo resin having the vinyl radical of 0.005 to 2 weight%, chelate platinum catalyst of 0.0005 to 0.005 weight%, and the residue of water and polyvinyl alcohoL

## Patentansprüche

1. Ein Silikonrelease-Polyesterfilm aus einem koextrudierten Polyesterfilm oder einer Polyesterfolie, **dadurch gekennzeichnet, dass** eine Oberfläche des koextrudierten Polyesterfilms oder der Polyesterfolie mit einer Silikon freisetzenden Flüssigkeit beschichtet ist, wobei die äußerste Schicht an der mit Silikon zu beschichtenden Oberfläche des koextrudierten Polyesterfilms oder der Polyesterfolie PET-I, ein Reaktionsprodukt von Ethylenglyol (EG) und Isophtalsäure (IPA) oder ein Reaktionsprodukt von Ethylenglycol (EG) und Dimethylisophtalat (DMI), und PET-G enthält, einem Reaktionsprodukt von Cyclohexandimethanol (CHDM) und Therephtalsäure (TPA) oder ein Reaktionsprodukt von Cyclohexandimethanol (CHDM) und Dimethylterephthalat (DMT), oder einem Copolymer davon, und
wobei die Silkon freisetzende Flüssigkeit 4 bis 30 Gew.-% Hexenylpolysiloxan, 0,02 bis 1 Gew.-%, Wasserstoffpolysiloxan, 0,005 bis 2 Gew.-% organisches Harz mit einem Vinylrest, 0,0005 bis 0,005 Gew.-% Chelat-Platin-Katalysator und Wasser- und Polyvinylalkoholreste umfasst.

2. Film nach Anspruch 1, **dadurch gekennzeichnet, dass** die Oberflächenrauhigkeit (BRa) der mit der Silikon freisetzenden Flüssigkeit beschichteten Oberfläche 0,005 µm bis 0,6 µm und die Oberflächenrauhigkeit (FRa) des nicht mit der Silikon freisetzenden Flüssigkeit beschichteten Polyesterfilms 0,0055 µm bis 6,6 µm beträgt.

3. Film nach Anspruch 2, **dadurch gekennzeichnet, dass** die mit der Silikon freisetzenden Flüssigkeit beschichtete Schicht nach Trocknung einen Rückstand von in einem organischen Lösungsmittel extrahierten Silikon von gleich oder kleiner 10 % aufweist.

4. Film nach Anspruch 3, **dadurch gekennzeichnet, dass** die getrocknete, mit der Silikon freisetzenden Flüssigkeit beschichtete Schicht eine Dicke von 0,1 bis 2,4 µm aufweist.

5. Ein Silikonrelease-Polyesterfilm aus einem koextrudierten Polyesterfilm oder einer Polyesterfolie, **dadurch gekennzeichnet, dass** mindestens zwei Oberflächen des koextrudierten Polyesterfilms oder der Polyesterfolie mit Silikon beschichtet sind, wobei die die äußerste Schicht an der mit Silikon zu beschichtenden Oberfläche des koextrudierten Polyesterfilms oder der Polyesterfolie PET-I enthält, einem Reaktionsprodukt von Ethylenglyol (EG) und Isophtalsäure (IPA) oder einem Reaktionsprodukt von Ethylenglyol (EG) und Dimethylisophtalat (DMI), PET-G, einem Reaktionsprodukt von Cyclohexandimethanol (CHDM) und Terephthalicacid (TPA) oder einem Reaktionsprodukt von Cyclohexandimethanol (CHDM) und Dimethylterephthalat (DMT), oder einem Copolymer hiervon,
wobei die Silkon freisetzende Flüssigkeit folgende umfasst : 4 bis 30 Gew.-% Hexenylpolysiloxan, 0,02 bis 1 Gew.-%, Wasserstoffpolysiloxan, 0,005 bis 2 Gew.-% organisches Harz mit einem Vinylrest, 0,0005 bis 0,005 Gew.-% Chelat-Platin-Katalysator und Wasser-und Polyvinylalkoholreste.

## Revendications

1. Film de polyester libérant du silicone d'un film ou d'une feuille de polyester coextrudé, **caractérisé en ce qu'**une surface du film ou de la feuille de polyester coextrudé est revêtue avec un liquide libérant du silicone, dans lequel la couche la plus extérieure sur la surface du film ou de la feuille de polyester coextrudé destiné à être recouverte de silicone contient du PET-I, qui est un produit de réaction d'éthylèneglyool (EG) et d'acide isophtalique (IPA) ou un produit de réaction d'éthylèneglyool (EG) et dimethylisophtalate (DMI), du PET-G qui est un produit de réaction de cyclohexanediméthanol (CHDM) et d'acide téréphtalique (TPA) ou un produit de réaction de cyclohexanediméthanol (CHDM) et de diméthyle téréphtalate (DMT), ou un copolymère de ceux-ci, et dans lequel le liquide libérant du silicone comprend de 4 à 30% en poids d'hexényle polysiloxane, de 0,02 à 1% en poids de polysiloxane d'hydrogène, de 0,005 à 2% en poids d'une résine organique comportant le radical vinyle, de 0,0005 à 0,005% en poids de catalyseur de chélate de platine, et le résidu d'eau et d'alcool polyvinylique.

2. Film selon la revendication 1, **caractérisé en ce que** la rugosité de surface (BRA) de la surface revêtue avec le liquide libérant du silicone est de 0,005 µm à 0,6 µm et la rugosité de surface (FRa) du film de polyester non revêtu avec le liquide libérant du silicone est de 0,0055 µm à 6,6 µm.

3. Film selon la revendication 2, **caractérisé en ce que** la couche revêtue avec le liquide libérant du silicone après séchage est inférieur ou égal à 10% de résidu de silicone extrait dans un solvant organique.

4. Film selon la revendication 3, **caractérisé en ce que** la couche séchée revêtue du liquide libérant du silicone a une épaisseur de 0,1 à 2,4 µm.

5. Film de polyester siliconé sortie d'un film ou d'une feuille de polyester coextrudé, **caractérisé en ce qu'**au moins deux surfaces du film ou de la feuille depolyester coextrudé sont enduites de silicone, dans lequel la couche la plus extérieure de la surface du film ou de la feuille de polyester coextrudé à revêtir de silicone contient du PET-I, qui est un produit de réaction d'éthylèneglyool (EG) et d'acide isophtalique (IPA) ou un produit de réaction d'éthylèneglyool (EG) et diméthylisophtalate (DMI), du PET-G qui est un produit de réaction de cyclohexanediméthanol (CHDM) et d'acide téréphtalique (TPA) ou un produit de réaction de cyclohexanediméthanol (CHDM) et de diméthyltéréphtalate (DMT), ou un copolymère de ceux-ci, dans lequel le liquide libérant du silicone comprend de 4 à 30% en poids d'hexényle polysiloxane, de 0,02 à 1% en poids de polysiloxane d'hydrogène, de 0,005 à 2% en poids d'une résine organique comportant le radical vinyle, de 0,0005 à 0,005% en poids de catalyseur de chélate de platine, et le résidu d'eau et d'alcool polyvinylique.
